# EUROPEAN PATENT APPLICATION

(11) **EP 4 684 857 A1**
(43) Date of publication of application: **28.01.2026**
(21) Application number: 24190665.0
(22) Date of filing: 24.07.2024
(51) Int. Cl.: B01D 19/02

(54) **FLOW DIVERTER, FLUID PORT SYSTEM AND FLUID VESSEL**

(71) Applicant: SARTORIUS STEDIM FMT SAS, 13400 Aubagne (FR)
(72) Inventor: MACHAVA, Marvin, 37079 Göttingen (DE); CHRISTIE, Alexander, Stonehouse, GL10 3UT (GB); GAY, Isabelle, 13400 Aubagne (FR)
(74) Representative: Cohausz & Florack

(57) **Abstract**

Depicted and described is a flow diverter (1) for use in a pharmaceutical process comprising: a diverter element (2) for diverting at least in sections a flow direction of a fluid, and at least one insert (3), preferably at least two inserts (3), for inserting into at least one fluid conduit (4), wherein the at least one insert (3), preferably the at least two inserts (3), respectively comprises a first end (5) arranged adjacent to, preferably connected to, the diverter element (2) and a second end (6) distanced from the diverter element (2), wherein the at least one insert (3), preferably the at least two inserts (3), respectively comprises a fastening section (7) for fastening the flow diverter (1) to the at least one fluid conduit (4), and wherein the at least one insert (3), preferably the at least two inserts (3), respectively has on the inside a hollow section (8) for conveying a fluid. In order to simplify the reduction of foam formation when conveying liquids, preferably in a pharmaceutical process, into a storage element (36) of a fluid vessel (35) the described flow diverter (1) is proposed.

## Description

The present invention relates to a flow diverter for use in a pharmaceutical process comprising: a diverter element for diverting at least in sections a flow direction of a fluid, and at least one insert, preferably at least two inserts, for inserting into at least one fluid conduit, wherein the at least one insert, preferably the at least two inserts, respectively comprises a first end arranged adjacent to, preferably connected to, the diverter element and a second end distanced from the diverter element, wherein the at least one insert, preferably the at least two inserts, respectively comprises a fastening section for fastening the flow diverter to the at least one fluid conduit, and wherein the at least one insert, preferably the at least two inserts, respectively has on the inside a hollow section for conveying a fluid.

The present invention further relates to a fluid port system for use in a pharmaceutical process comprising: at least one fluid port, and at least one flow diverter, wherein the at least one fluid port comprises at least one fluid conduit, preferably a plurality of fluid conduits, wherein the at least one flow diverter is inserted into the at least one fluid conduit and, preferably, connected to the at least one fluid conduit in a form-fitting and/or force-fitting manner.

The present invention further relates to a fluid vessel for use in a pharmaceutical process comprising: a storage element for storing a fluid, and at least one fluid port system, wherein the storage element comprises a bottom wall section and/or at least one sidewall section.

In pharmaceutical, in particular biopharmaceutical, processes single use storage elements for liquid applications and fluid ports feeding a fluid, in particular a process liquid, from the bottom of the storage element can be used for example as a recirculation tank, preferably for recirculating retentate, during tangential flow filtration (TFF). During this process step, the process liquid containing product is recirculated continuously between the recirculation tank and the TFF cassette. The crossflow rate of the process liquid through the TFF cassette is predetermined by the process and optimized to control membrane fouling, which is essential for a good purification and buffer exchange performance. The crossflow rate is determined by the feed flow rate, meaning the flow rate with which the process liquid is pumped from the recirculation tank into the TFF cassette. Thereby, the flow rate of the retentate (meaning the process liquid leaving the TFF cassette unfiltered), which is guided back to the recirculation tank, is also determined by the process.

However, when the level of process liquid in the recirculation tank is low and/or the fluid port is arranged in an unfavorable position or orientation the process liquid, in this case retentate, flowing into the recirculation tank can start foaming. This occurs particular when the fluid port, in particular the conduit of the fluid port, through which the process liquid enters the recirculation tank is positioned on the bottom of the recirculation tank and is oriented upward. In this case the process liquid forms an upward jet that due to its inertia rises above the level of the process liquid contained in the recirculation tank and forms a fountain. This fountain leads to excessive air incorporation into the process liquid contained in the recirculation tank. During biopharmaceutical processes, the process liquid contains substances, like a target molecule, that are prone to foaming. Hence, the incorporated air bubbles lead to excessive foam formation on the liquid surface. The occurrence of a fountain can, however, also be observed during other processes, where a fluid, in particular liquid, is pumped into the storage element via the fluid ports arranged at the bottom of the storage element.

As the flow rate of these fluid streams, especially during TFF, is often predetermined by the process, a reduction of the flow rate to prevent fountaining is often not an option. Foam, however, has various negative impacts on processes and process liquids containing biopharmaceutical products like monoclonal antibodies and virus products. Bursting foam bubbles create a high amount of shear stress, that can damage these shear sensitive products. Thereby, a foam layer in the storage element will lead to significant product damage. Moreover, the contents within the foam layer are no longer mixed with the liquid phase. As buffer exchange and impurity removal are, for example, a target for TFF, the impurities within the foam layer will not be removed by the process step, thus drastically decreasing the purification efficiency.

Against this background, it is an object of the present invention to provide a flow diverter, a fluid port system and a fluid vessel which simplify the reduction of foam formation when conveying liquids, preferably in a pharmaceutical process, into a storage element of a fluid vessel.

The object named above is solved in accordance with the present invention by the flow diverter for use in a pharmaceutical process comprising: a diverter element for diverting at least in sections a flow direction of a fluid, and at least one insert, preferably at least two inserts, for inserting into at least one fluid conduit, wherein the at least one insert, preferably the at least two inserts, respectively comprises a first end arranged adjacent to, preferably connected to, the diverter element and a second end distanced from the diverter element, wherein the at least one insert, preferably the at least two inserts, respectively comprises a fastening section for fastening the flow diverter to the at least one fluid conduit, and wherein the at least one insert, preferably the at least two inserts, respectively has on the inside a hollow section for conveying a fluid.

The object named above is further solved in accordance with the present invention by the fluid port system in that the at least one flow diverter is a flow diverter according to any one of claims 1 to 13.

The object named above is further solved in accordance with the present invention by the fluid vessel in that the at least one fluid port system is a fluid port system according to any one of claims 14 to 15.

Various embodiments of the flow diverter, the fluid port system and the fluid vessel are described in the following. The individual embodiments are in each case individually applicable to the flow diverter, the fluid port system and the fluid vessel. The individual embodiments may furthermore be combined with each other at will.

The flow diverter for use in a pharmaceutical process comprises: a diverter element for diverting at least in sections a flow direction of a fluid. In this way the formation of a fountain, in particular formed by an upward jet, can be reduced or even prevented and thus the formation of foam can be reduced or even substantially prevented. The fluid can preferably be a liquid. The flow diverter can be a single use flow diverter and/or the flow diverter can be made at least in sections of plastic, preferably polyamide (PA), in particular polyamide 2200.

The flow diverter is preferably a stand-alone flow diverter, thus preferably provided for a detachable connection to a fluid conduit and/or a fluid port and/or not provided for an integral connection to a fluid conduit and/or a fluid port. On the one hand this allows for a more complex and flow optimized shape of the flow diverter and/or simplified manufacturing. On the other hand, a stand-alone flow diverter can be easily used for different types of fluid conduits, fluid ports, fluid port systems and/or fluid vessels. Moreover, the stand-alone flow diverter can be added or removed at will and preferably depending on the process requirements. For example, if a closed fluid vessel is not inflated prior to usage, the fluid vessel does not contain an air headroom during filling with the fluid, thus no fountaining occurs. In this case the flow diverter can be dispensed with to provide lower shear forces at high flow rates. Furthermore, on solid-liquid applications, for example common during powdered media preparation, the flow diverter could be clogged with solid particles. In this case the flow diverter can also be dispensed with to avoid clogging. Overall, a stand-alone flow diverter can be used very flexible.

The flow diverter further comprises at least one insert, preferably at least two inserts, for inserting into at least one fluid conduit. In this way the flow diverter can be easily mounted to a fluid conduit, preferably the inner sidewalls of the fluid conduit. The at least one insert, preferably the at least two inserts, can advantageously extend respectively at least in sections, preferably obliquely, away from the diverter element. This simplifies distancing the diverter element from an outlet of a fluid conduit and thus simplifies providing a gap between the diverter element and the outlet of the fluid conduit through which the diverted fluid can be conveyed. The at least one insert, preferably the at least two inserts, can respectively be formed in one piece with the diverter element, thus simplifying manufacturing of the flow diverter.

Furthermore, it is provided that the at least one insert, preferably the at least two inserts, respectively comprises a first end arranged adjacent to, preferably connected to, the diverter element and a second end distanced from the diverter element.

Furthermore, it is provided that the at least one insert, preferably the at least two inserts, respectively comprises a fastening section for fastening the flow diverter to the at least one fluid conduit. This simplifies mounting the flow diverter to a fluid conduit, preferably the inner sidewalls of the fluid conduit. The respective fastening section can preferably be designed for a detachable connection with the fluid conduit. The respective fastening section preferably comprises at least a section of the sidewall of the respective insert and/or at least in section the outer surface of the respective insert. Irrespective of this the sidewall of the respective insert preferably comprises the outer surface and/or the inner surface of the respective insert. The respective fastening section is advantageously distanced from the diverter element and/or arranged at least in sections at the second end of the respective insert. This simplifies distancing the diverter element from an outlet of a fluid conduit and thus simplifies providing a gap between the diverter element and the outlet of the fluid conduit through which the diverted fluid can be conveyed.

Furthermore, it is provided that the at least one insert, preferably the at least two inserts, respectively has on the inside a hollow section for conveying a fluid. In this way fluid can be conveyed from a fluid conduit, preferably into which the at least one insert is inserted, through the at least one insert to the flow diverter element and be diverted there. In this way a constructively easy to implement flow diversion can be achieved. The diverter element can be designed to close off the respective hollow section of the at least one insert, preferably the at least two inserts. This further simplifies diverting the flow direction of the fluid.

The diverter element can be designed for diverting at least in sections the flow direction of the fluid with respect to the flow direction of the fluid in the respective hollow section. Alternative or in addition the diverter element can be designed for diverting at least in sections the flow direction of the fluid, preferably with respect to the flow direction of the fluid in the respective hollow section, by at least 30°, preferably at least 45°, more preferably at least 60°, further preferably at least 75°, in particular at least 90°, and/or for discharging fluid, preferably diverted by the diverter element, from the flow diverter, preferably the at least one insert, in particular the at least two inserts, respectively over an angular range of at least 45°, preferably at least 90°, more preferably at least 180°, further preferably at least 270°, further preferably at least 345°, in particular 360°. The fluid is thus discharged in a plurality of directions, in particular in every possible direction, around the flow diverter. This reduces shear stress on product in the fluid as well as reduces the possibility of incorporating air due to turbulence vortices, which would lead to foaming. The respective angular range advantageously extends radially around the respective insert and/or the center axis of the respective insert.

In an embodiment of the flow diverter it is provided that the diverter element comprises a first side and/or a second side arranged opposite to the first side of the diverter element and in that the at least one insert, preferably the at least two inserts, is arranged adjacent to, preferably connected to, the second side of the diverter element and/or the respective hollow section faces, preferably at the first end of the at least one insert, preferably the at least two inserts, the second side of the diverter element. Moreover, it is preferably provided that the at least one insert, preferably the at least two inserts, is arranged adjacent to, preferably connected to, the second side of the diverter element with the first end of the respective at last one insert, preferably at least two inserts.

In an embodiment of the flow diverter it is provided that the at least one insert, preferably the at least two inserts, has respectively an inlet section comprising at least one inlet, preferably a plurality of inlets, fluidly connected to the respective hollow section and/or in that the at least one insert, preferably the at least two inserts, has respectively an outlet section comprising at least one outlet, preferably a plurality of outlets, fluidly connected to the respective hollow section. In this way it is simplified to convey the fluid from a fluid conduit through the at least one insert to the flow diverter element and be diverted there. In this way a constructively easy to implement flow diversion can be achieved. The at least one inlet, preferably the plurality of inlets, comprises, in particular is formed by, at least one opening, preferably a plurality of openings, and/or the at least one outlet, preferably the plurality of outlets, comprises, in particular is formed by, at least one opening, preferably a plurality of openings. The inlet section can preferably be designed to allow a fluid connection between the hollow section and the fluid conduit into which the respective insert is inserted and/or the outlet section can preferably be designed to allow a fluid connection between the hollow section and a storage element for storing fluid. Preferably in the case of at least two inserts each insert is respectively designed as explained in the section above.

In an embodiment of the flow diverter it is provided that the inlet section, preferably the at least one inlet, in particular the plurality of inlets, is arranged at the second end of the respective insert, in a sidewall of the respective insert and/or a at distance from the diverter element. On the one hand this simplifies distancing the diverter element from the inlet section and thus also from the fluid conduit. This in turn simplifies providing a gap between the diverter element and the outlet of the fluid conduit through which the diverted fluid can be conveyed. On the other hand, providing the inlet section in the sidewall of the respective insert simplifies manufacturing of the diverter element.

Alternative or in addition it is provided that the outlet section, preferably the at least one outlet, in particular the plurality of outlets, is arranged at the first end of the respective insert adjacent to, preferably connected to, the diverter element and/or in a sidewall of the respective insert. On the one hand this simplifies that the fluid is diverted in the region of the outlet as the outlet section is arranged at the first end, where preferably the diverter element is provided, and thus foaming is at least reduced. On the other hand, providing the outlet section in the sidewall of the respective insert simplifies manufacturing of the diverter element.

In an embodiment it is provided of the flow diverter it is provided that the outlet section comprises at least one bar, preferably a plurality of bars, and in that, preferably, the at least one bar, preferably the plurality of bars, at least in sections encompass, preferably at least in sections form, the at least one outlet, preferably the plurality of outlets, the at least one bar, preferably the plurality of bars, is arranged adjacent to, preferably connected to, the diverter element, preferably the second side of the diverter element, the at least one bar, preferably the plurality of bars, extends away from the diverter element, preferably the second side of the diverter element, and/or the plurality of bars are arranged, preferably evenly distributed, around the circumference of the outlet section. In this way an outlet section is provided which on the one hand allows for a flow efficient conveying of fluid diverted by the diverter element, on the other hand a constructive simple implementation of the outlet section in the respective insert can be achieved. It is preferably provided that each insert preferably comprises at least one bar, preferably a plurality of bars, as described above. The at least one bar, preferably the plurality of bars can extend at least in sections in a straight line and/or at least in sections obliquely with respect to the diverter element, preferably with respect to the second side of the diverter element. The oblique extension of the bars on the one hand simplifies a stable connection over a wide base area between the diverter element and the respective insert, preferably adjacent to the outlet section, and on the other hand simplifies providing a sufficiently small inlet section which can be inserted into the fluid conduit. It can also be provided that the respective outlet section is formed by the at least one bar, preferably the plurality of bars.

In an embodiment of the flow diverter it is provided that the center axis of the at least one outlet, preferably the plurality of outlets, is arranged at least in sections obliquely and/or parallel with respect to the center axis of the at least one inlet, preferably the plurality of inlets, and/or the center axis of the hollow section. In particular by arranging the center axis of the at least one outlet at least in section obliquely with respect to the center axis of the at least one inlet and/or the center axis of the hollow section it is simplified that the fluid conveyed through the respective inlet is diverted in the region of the outlet and thus foaming is reduced.

Alternative or in addition it is provided that the center axis of the at least one inlet, preferably the plurality of inlets, is arranged at least in sections parallel and/or obliquely with respect the center axis of the hollow section. In particular by arranging the center axis of the at least one inlet at least in section parallel with respect to the center axis of the hollow section a smooth flow of the fluid from the inlet through the hollow section is simplified.

In the cases described above the center axis of the at least one outlet, preferably the plurality of outlets, the center axis of the at least one inlet, preferably the plurality of inlets, and/or the center axis of the hollow section preferably refer in each case to the center axes of the respective insert.

The respective center axis of the at least one outlet, preferably the plurality of outlets, extends advantageously from one free end to another free end of the respective outlet, preferably from one free end of at least one opening of the respective outlet to another free end of the respective opening of the outlet, and/or through the center of the cross section of the respective outlet. The respective center axis of the at least one inlet, preferably the plurality of inlets, extends advantageously from one free end to another free end of the respective inlet, preferably from one free end of at least one opening of the respective inlet to another free end of the respective opening of the inlet, and/or through the center of the cross section of the respective inlet. The respective center axis of the hollow section extends preferably from the first end of the respective insert to the second end of the respective insert and/or through the center of the cross section of the respective insert.

In an embodiment of the flow diverter it is provided that the outer surface and/or the inner surface of the outlet section tapers at least in sections, preferably from the first end of the respective insert and/or in the direction towards the second end of the respective insert. On the one hand this simplifies a stable connection over a wide base area between the diverter element and the respective insert, in particular when the inlet section has a smaller diameter. On the other hand, this reduces turbulences in the area outlet section, in particular for fluid exiting the hollow section.

Alternatively or in addition it can be provided that the respective free end of at least one opening, preferably the plurality of openings, of the at least one outlet, preferably the plurality of outlets, tapers at least in sections, preferably from the first end of the respective insert and/or in the direction towards the second end of the respective insert.

Alternatively or in addition it is provided that the outer surface and/or the inner surface of the outlet section is straight at least in sections, preferably from the first end of the respective insert and/or in the direction towards the second end of the respective insert. This simplifies manufacturing of the diverter element.

Alternatively or in addition it is provided that the at least one outlet, preferably the plurality of outlets, is formed at least in sections by a plurality of openings arranged at least in sections around the circumference of the respective outlet section and/or arranged in at least two rows, preferably extending away from the diverter element. This simplifies diverting a larger amount of fluid using the diverter element. The plurality of openings is preferably arranged entirely around the circumference of the respective outlet section.

In an embodiment of the flow diverter it is provided that the inlet section, preferably the at least one inlet, in particular the plurality of inlets, is formed at least in sections by an inlet grid structure for filtering a fluid. Alternatively or in addition the outlet section, preferably the at least one outlet, in particular the plurality of outlets, is formed at least in sections by an outlet grid structure for filtering a fluid. On the one hand the respective grid structure can act as a filter and in this way unwanted matter can be filtered at the inlet and/or the outlet. On the other hand, the grid structure, in particular the outlet grid structure, can be used to reduce foaming, for example by diverting the fluid. The above effects can be amplified if the inlet section, preferably the at least one inlet, in particular the plurality of inlets, is formed predominantly, preferably entirely, by the inlet grid structure and/or the outlet section, preferably the at least one outlet, in particular the plurality of outlets, is formed predominantly, preferably entirely, by the outlet grid structure.

In addition, it is provided that, preferably, the outlet grid structure is arranged at least in sections, preferably entirely, around the respective circumference of the at least one insert, preferably the at least two inserts, and/or the outlet grid structure forms at least in sections, preferably predominantly, the at least one insert, preferably the at least two inserts. In this way the effects mentioned above with respect to the respective grid structure are amplified. In addition, this simplifies manufacturing of the flow diverter, in particular when the respective grid structure is arranged entirely around the respective circumference and/or forms predominantly, in particular entirely, the respective insert.

Alternative or in addition it can be provided that the inlet grid structure for filtering a fluid can be arranged respectively within the at least one insert, preferably the at least two insert and/or within the respective hollow section of the at least one insert, preferably the at least two inserts. Thus, the inlet grid structure can be arranged at other sections of the insert and not only at the inlet section.

In an embodiment of the flow diverter it is provided that the diverter element, preferably the first side and/or the second side of the diverter element, is at least in sections, preferably adjacent to the at least one outlet, in particular of the respective insert, plate shaped, in that the diverter element, preferably the first side and/or the second side of the diverter element, is at least in sections, preferably adjacent to at least one outlet, in particular of the respective insert, flat and/or bent and/or in that at least one projection, preferably a plurality of projections, projects from the first side of the diverter element and/or extends from one edge to an opposite edge of the first side of the diverter element. By designing a side of the diverter element plate shaped and/or flat, turbulences caused by the diverter element can be minimized thus improving conveying of fluid. By providing at least one projection the stiffness of the diverter element can be increased. This is in particular advantageous when the diverter element comprises recesses, which recesses would otherwise lead to an overall lower stiffness of the flow diverter. It is in particular advantageous if the second side of the diverter element is at least in sections, preferably predominantly, in particular entirely, flat and/or plate shaped, adjacent to the at least one inlet, preferably the at least two inlets. This also minimizes turbulences. The at least one projection, preferably the plurality of projections, can be formed by at least one bent section, preferably at least two bent sections, and/or at least one flat section of the diverter element.

In an embodiment of the flow diverter it is provided that the flow diverter comprises at least one spacer designed for distancing the diverter element from the at least one fluid conduit and/or for providing a gap between the diverter element and the at least one fluid conduit and in that, preferably, the at least one spacer is arranged adjacent to, preferably connected to, the diverter element, preferably the second side of the diverter element, the at least one spacer extends away from the diverter element, preferably the second side of the diverter element, and/or the at least one spacer is distanced from the at least one insert, preferably the at least two inserts. This simplifies distancing the diverter element from an outlet of a fluid conduit and thus simplifies providing a gap between the diverter element and the outlet of the fluid conduit through which the diverted fluid can be conveyed. The diverter can comprise a plurality of respective spacers and advantageously the plurality of spacers are arranged adjacent to, preferably connected to, the diverter element, preferably the second side of the diverter element, the plurality of spacers extend away from the diverter element, preferably the second side of the diverter element, and/or the plurality of spacers are distanced from the at least one insert, preferably the at least two inserts. The plurality of spacers thus simplifies providing a stable and preferably constant gap between the diverter element and the outlet of the fluid conduit. The at least one spacer, preferably the plurality of spacers, can be distanced radially from the respective hollow section of at least one insert, preferably at least two inserts, distanced radially from the central axis of the respective hollow section of at least one insert, preferably at least two inserts and/or distanced from each other along the diverter element. This further simplifies providing a stable gap between the diverter element and the outlet of the fluid conduit.

In an embodiment of the flow diverter it is provided that the at least two inserts are spaced apart from each other, preferably along the diverter element, and/or in that the at least two inserts are provided for inserting into different fluid conduits. In this way the flow diverter can be more easily mounted securely and an unwanted rotation of the diverter element is more easily avoided. The at least two inserts are preferably spaced apart from each other along the longitudinal extension of the diverter element.

In an embodiment of the flow diverter it is provided that the diverter element is at least in sections, preferably predominantly, in particular entirely, formed by a diverter grid structure for filtering a fluid and/or in that the diverter element is at least in sections curved, preferably spherical in shape. By designing the diverter element at least in sections by a diverter grid structure the fluid, in particular a large amount of fluid, can be filtered and preferably at the same time diverted. Shaping the diverter element at least in sections curved, preferably spherical, in particular when the diverter element is at least in sections formed by the diverter grid structure, simplifies filtering and/or diverting a large amount of fluid due to the enlarged surface compared to a flat design. To amplify this effect is in particular envisaged that at least 25 %, preferably at least 50 %, in particular at least 75 %, of the diverter element is curved, preferably spherical in shape, and/or in that the curved section, preferably the spherical shaped section, of the diverter element is at least in sections, preferably predominantly, in particular entirely, formed by the diverter grid structure.

In an embodiment of the flow diverter it is provided that the fastening section is designed for a form-fitting and/or force-fitting connection with the at least one fluid conduit, in that a cross section of the fastening section has at least in sections a smaller diameter than a cross section of the outlet section and/or in that the outer surface of the fastening section widens at least in sections, preferably in the direction towards the second end, and/or the outer surface of the fastening section is at least in sections conically shaped. In this way a stable and at the same time easy to establish connection can be provided between the flow diverter and the at least one fluid conduit. In addition, by the embodiment that the fastening section has at least in sections a smaller diameter than a cross section of the outlet section, it is simplified that the diverter element is stably connected to the respective insert over a wide base area between the diverter element and the respective insert, even if the respective inlet section and/or the respective insert has at least in section a small diameter.

In an embodiment of the flow diverter it is provided that the flow diverter comprises a skirt element arranged adjacent to, preferably connected to, the diverter element, and extending away from the diverter element and in that the skirt element comprises at least in sections a skirt grid structure for filtering a fluid. In this way filtering and/or diverting the fluid can be simplified. In addition, providing a skirt grid structure simplifies providing a respective grid structure for filtering and/or diverting the fluid, in particular compared to a grid structure provided at the at least one inlet and/or the at least one outlet of the inserts. The skirt element and/or the skirt grid structure can be arranged adjacent to, preferably connected to, the second side of the diverter element. Alternatively or in addition the skirt element and/or the skirt grid structure can extend at least in sections towards the respective second end of the at least one insert, preferably of the at least two inserts.

In an embodiment of the flow diverter it is provided that the skirt element is arranged at least in sections, preferably entirely, around the circumference of the diverter element and/or the skirt element is distanced from the at least one insert, preferably the at least two inserts, and/or in that the skirt grid structure is provided at least in sections, preferably entirely, around the circumference of the skirt element and/or the skirt grid structure forms at least in section, preferably predominantly, the skirt element. This further simplifies filtering and/or diverting a large amount of fluid, as the skirt element and/or the skirt grid structure is provided over a large area, in particular around the circumference of the diverter element. Moreover, this further simplifies providing the skirt element and/or the skirt grid structure at the flow diverter, as the skirt element and/or the skirt grid is arranged at or even forms an outer section of the flow diverter.

In an embodiment of the flow diverter it is provided that the inlet grid structure, the outlet grid structure, the diverter grid structure and/or the skirt grid structure has at least in sections openings with an average diameter of at least 0.25 mm, preferably at least 0.5 mm, in particular at least 0.75 mm, and/or at most 1.25 mm, preferably at most 1 mm, more preferably at most 0.75 mm, in particular at most 0.5 mm, and/or in that the inlet grid structure, the outlet grid structure, the diverter grid structure and/or the skirt grid structure has at least in sections openings with a curved, preferably circular, and/or polygonal, preferably triangular, rectangular and/or hexagonal, cross section. It has shown that these diameters and/or shapes reduce foaming and/or provide a sufficient filtering of the fluid. The respective openings of the inlet grid structure can be the openings of the at least one inlet, preferably the plurality of inlets. The openings of the skirt grid structure, the openings of the outlet grid structure and/or the openings of the diverter grid structure can be the openings of the at least one outlet, preferably the plurality of outlets.

In an embodiment of the flow diverter it is provided that the diverter element has at least one recess, preferably a plurality of recesses, and in that, preferably, the at least one recess, preferably the plurality of recesses, is arranged at least in sections at the circumference of the diverter element, the plurality of recesses are arranged, preferably in an alternating pattern, on opposite sides of the diverter element, the at least one recess, preferably the plurality of recesses, is arranged, preferably in each case, adjacent to the least one projection, preferably the plurality of projections, and/or the at least one recess, preferably the plurality of recesses, extends from the first side of the diverter element to the second side of the diverter element. The at least one recess allows for an easy accessibility of a fluid port and/or fluid conduit into which the flow diverter is inserted to. In particular during manufacturing of a fluid port system or fluid vessel comprising such a flow diverter production machines can reach the fluid port and/or fluid conduit even after the insertion of the flow diverter into the respective fluid port and/or fluid conduit through the at least one recess, thus simplifying production. The at least one recess, preferably the plurality of recesses, can be formed at least in sections bend, preferably circular, and/or at least in sections cylindrical.

The fluid port system for use in a pharmaceutical process comprises at least one fluid port. The at least one fluid port allows for the easy connection of different fluid conveying and/or fluid storing elements, for example a storage element for storing fluid and a fluid conduit. The at least one fluid port can be a single use fluid port and/or the at least one fluid port can be made at least in sections of plastic, preferably polyethylene (PE).

In addition, the fluid port system comprises at least one flow diverter. The flow diverter reduces foaming as explained with regard to the flow diverter described above. The fluid port system can also comprise a plurality of flow diverters and/or a plurality of fluid ports. The plurality of fluid ports can be arranged adjacent to each other, preferably connected to each other. Alternatively or in addition the plurality of fluid ports can be formed in one piece.

In addition, it is proved that the at least one fluid port comprises at least one fluid conduit, preferably a plurality of fluid conduits. In the case of a plurality of fluid ports, the plurality of fluid ports can comprise the at least one fluid conduit, preferably the plurality of fluid conduits. The at least one fluid conduit, preferably the plurality of fluid conduits, can respectively comprise at least one fluid conduit inlet and/or at least one fluid conduit outlet. The plurality of fluid ports can be arranged in a row. This in particular simplifies to efficiently connect several fluid conveying elements with at least one fluid storing element.

In addition, it is provided that the at least one flow diverter is inserted into the at least one fluid conduit and, preferably, connected to the at least one fluid conduit in a form-fitting and/or force-fitting manner. In the case of a plurality of flow diverters it is advantageous if each one of the plurality of flow diverters is inserted into at least a respective fluid conduit of the plurality of fluid conduits. In this way foaming is effectively reduced, in particular regardless of via which fluid conduit the fluid is presently conveyed. The at least one flow diverter, preferably the plurality of flow diverters, are preferably inserted respectively via at least one insert, preferably at least two inserts, into the at least one fluid conduit, preferably the respective fluid conduit of the plurality of fluid conduits.

In addition, it is provided that the at least one flow diverter is a flow diverter according to any one of claims 1 to 13. The effects of the flow diverter already described above can therefore be achieved.

In an embodiment of the fluid port system it is provided that the plurality of fluid conduits are arranged in a row and in that at least one insert is arranged in a fluid conduit at a first end of the row, at least one insert is arranged in a fluid conduit at a second end of the row, at least two inserts are spaced apart by at least one fluid conduit, preferably at least two fluid conduits, of the row of fluid conduits, and/or at least one fluid conduit, preferably at least two fluid conduits, of the row of fluid conduits is free from inserts. In this way a stable connection can be provided between the flow diverter and the fluid ports, in particular without unwanted rotation of the diverter element. Moreover, keeping at least one fluid conduit free from inserts simplifies achieving a smooth flow of the fluid. The first end of the row and the second end of the row are preferably arranged on opposite ends and/or sides of the row of conduits.

The fluid vessel for use in a pharmaceutical process comprises: a storage element for storing a fluid. The storage element can be designed as a recirculation tank, preferably for recirculating retentate during tangential flow filtration (TFF). Alternative or in addition the storage element can be a single use storage element and/or the storage element can be made at least in sections of plastic, preferably polyethylene (PE).

In addition, the fluid vessel can comprise at least one fluid port system, wherein the storage element comprises a bottom wall section and/or at least one sidewall section. The bottom wall section is preferably intended to form at least in sections the area of the storage element closest to the ground when in use.

In addition, it is provided that the at least one fluid port system is a fluid port system according to any one of claims 14 to 15. The effects of the fluid port system already described above can therefore be achieved.

In an embodiment of the fluid vessel it is provided that the at least one fluid port system is arranged at the bottom wall section of the storage element and/or in that the at least one fluid conduit, preferably the plurality of fluid conduits, is fluidly connected with the storage element. Arranging the fluid port system at the bottom wall section simplifies conveying fluid to and away from the storage element via the fluid port system, in particular simplifies draining the storage vessel via the fluid port system. Alternative or in addition the at least one fluid port system can be arranged at least in sections at the area of the storage element closest to the ground when in use.

Further features and advantages of the flow diverter, the fluid port system and the fluid vessel emerge from the following description of exemplary embodiments where reference is made to the attached drawing.

### In the drawing

- Fig. 1: shows a first embodiment of a flow diverter in a perspective view from above,
- Fig. 2: shows a section of the flow diverter of Fig. 1 in a front view,
- Fig. 3: shows a perspective view of the of the flow diverter of Fig. 1 from below together with a detail of this view,
- Fig. 4: shows a top view of the flow diverter of Fig. 1,
- Fig. 5: shows a bottom view of the flow diverter of Fig. 1,
- Fig. 6: shows a first embodiment of a fluid port system comprising the flow diverter of Fig. 1 in a perspective view,
- Fig. 7: shows the fluid port system of Fig. 6 in a sectional front view together with a detail of this view,
- Fig. 8a: shows a second embodiment of a fluid port system in a perspective view,
- Fig. 8b: shows a third embodiment of a fluid port system in a perspective view,
- Fig. 8c: shows a fourth embodiment of a fluid port system in a perspective view,
- Fig. 9: shows a second embodiment of a flow diverter in a perspective view from below,
- Fig. 10: shows a third embodiment of a flow diverter in a perspective view from below,
- Fig. 11: shows a fourth embodiment of a flow diverter in a perspective view from below,
- Fig. 12: shows an embodiment of fluid vessel comprising the fluid port system of Fig. 6 in a sectional view, and
- Fig. 13: shows a graph depicting the feed pressure in correlation to the flow rate for a fluid port with and without a flow diverter according to Fig. 1.

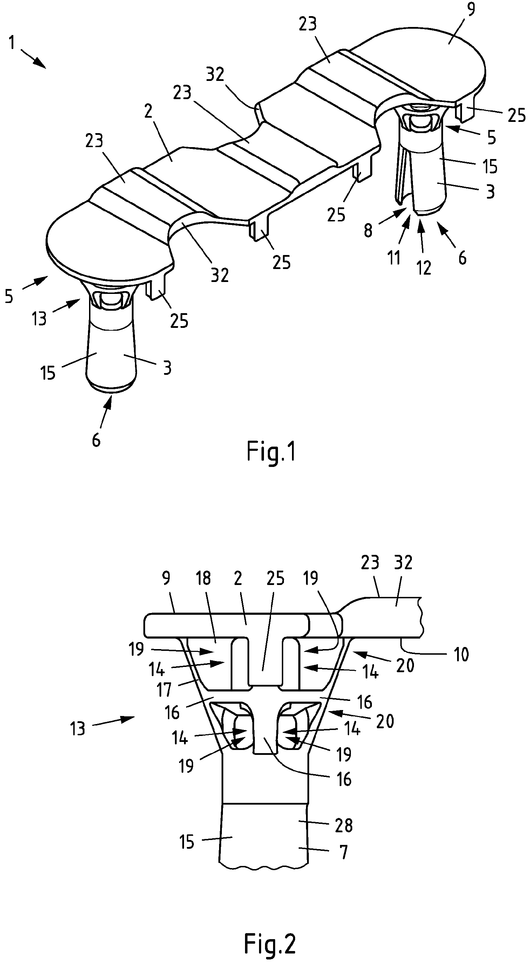

Fig. 1 shows a first embodiment of a flow diverter 1 in a perspective view from above. The flow diverter 1 comprises a diverter element 2 for diverting a flow direction of a fluid, which fluid is preferably intended to be conveyed from a fluid port to a storage element. The flow diverter 1 comprises two inserts 3, wherein each insert 3 is intended for inserting into a respective fluid conduit of a fluid port.

Each of the inserts 3 comprises a first end 5 which is arranged adjacent to the diverter element 2 and a second end 6 distanced from the diverter element 2. In addition, the two inserts 3 are spaced apart from each other. Each of the inserts 3 has an inlet section 11 comprising an inlet 12 through which the fluid can be conveyed through a hollow section 8 in the respective insert 3. The inlet section 11 is arranged at least in sections at the second end 6 of the respective insert 3. In addition, each of the inserts 3 comprises an outlet section 13 through which fluid conveyed through the hollow section 8 exits the insert 3. The outlet section 13 is arranged at the first end 5 of the respective insert 3. Due to the diverter element 2 being arranged adjacent to the first end 5 of the insert 3 and thus also at the end of the hollow section 8 the fluid conveyed through the insert 3 is diverted into at least one other direction. As a result, no upward jet can form thus reducing the formation of foam.

For the sake of clarity, the reference signs for the hollow section 8, the inlet section 11, the inlet 12 and the outlet section 13 are shown in Fig. 1 only for one of the inserts 3, however, it is clear from the drawing for a person skilled in the art that the other insert 3 is designed respectively. Moreover, the design of the inlet section 11 as well as the design of the outlet section 13 will be described later on in more detail.

In order to distance the diverter element 2 from a fluid conduit, the flow diverter 1 comprises a plurality of spacers 25, which will be described later on in more detail. The spacers 25 are formed in the shown embodiment in one piece with the diverter element 2 in the shown embodiment, thus simplifying manufacturing of the flow diverter. However, this does not need to be the case.

The shown diverter element 2 is in general plate shaped, wherein the first side 9 of the diverter element 2 comprises a plurality of projections 23, in the present case three projections 23, which project from the first side 9 of the diverter element 2 and extend from one edge 24 to an opposite edge 24' of the first side 9 of the diverter element 2. The projections 23 are respectively formed by a flat section and two bend sections arranged at the sides, in particular opposite sides, of the flat section. Between the projections 23 further flat sections of the diverter element 2 extend. Adjacent to the projections 23 recesses 32 are provided. The recesses 32 will be described later on in more detail. The projections 23 increase the stiffness of the flow diverter 1, in particular of the diverter element 2. The recesses 32 allow it to easily access a fluid conduit 4 and/or fluid port 34 underneath the flow diverter 1, in particular with production machines, even if the flow diverter is already inserted into the respective fluid conduit 4 and/or fluid port 34. This simplifies production of fluid port systems 33 and/or fluid vessels 35 comprising such a flow diverter 1.

Fig. 2 shows a section of the flow diverter 1 of Fig. 1 in a front view. In Fig. 2 explicitly the left-hand side section of the flow diverter 1 as shown in Fig. 1 is depicted.

The outlet section 13 of the flow diverter 1 will be now explained in more detail. The outlet section 13 is connected to the diverter element 2 at the second side 10 of the diverter element 2 and the outlet section 13 is formed in the sidewall 15 of the insert 3. In the shown embodiment the outlet section 13 comprises a plurality of outlets 14 arranged in two rows 20, however other designs with less or more rows or no rows are also possible. The outlets 14 in the shown embodiment are in each case formed by an opening 19 in the sidewall 15 of the insert 3.

In the shown embodiment the outlet section 13 comprises a plurality of bars 16 which encompass the outlets 14 at least in sections. In the present embodiment the bars 16 are part of the sidewall 15 of the insert 3. Some of the bars 16 extend from the diverter element 2 towards the second end 6 of the insert 3 and are evenly distributed around the circumference of the outlet section 13, thus forming the outlets 14 at least in sections. Moreover, the bars 16 are connected to the diverter element 2, in the present embodiment are even manufactured in one piece with the diverter element 2 and the rest of the insert 3. This provides a stable connection between the diverter element 2 and the insert 3 while the large area outlets 14 formed by the bars 16 at the same time allow for a large amount of fluid to be conveyed out of the insert 3 through the outlets 14 encompassed and formed by the bars 16.

Moreover, in the embodiment shown the outer surface 17 of the outlet section 13 tapers from the first end 5 of the insert 3 in the direction towards the second end 6 of the insert 3. However, the inner surface 18 of the outlet section 13 does not have to taper as well. In addition, the sidewall 15 of the insert 3 starts to widen towards the second end 6 of the insert 3 subsequent to the outlet section 13 to provide a fastening 7 section which will be described later on in more detail.

Though only the left-hand side insert 3 was described these explanations can respectively be applied to the other, right-hand side, insert 3 of the flow diverter 1.

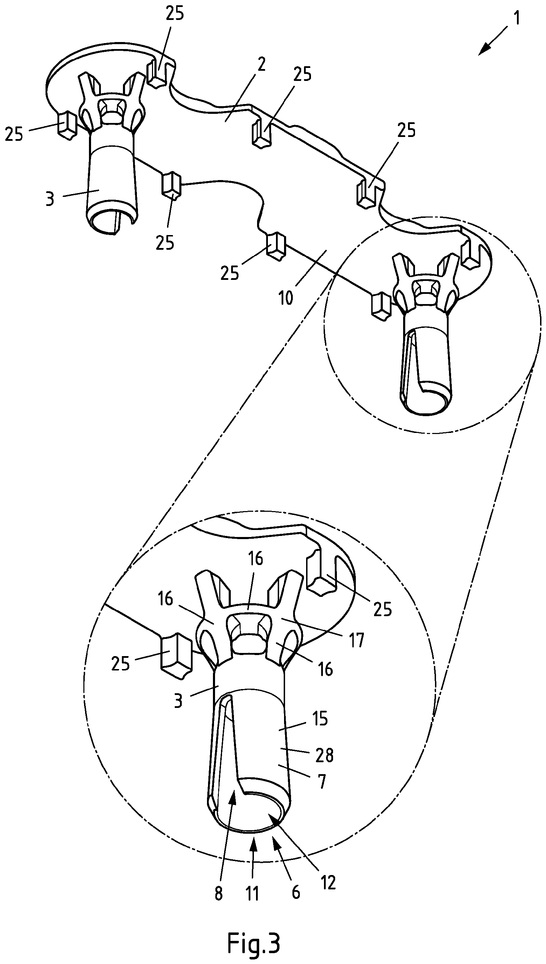

Fig. 3 shows a perspective view of the of the flow diverter 1 of Fig. 1 from below together with a detail of this view.

The spacers 25 already mentioned can be seen here in more detail. The spacers 25 are arranged at the second side 10 of the diverter element 2 and extend away from the diverter element 2, preferably substantially along the extension of the inserts 3. In addition, the spacers 25 are distanced from the inserts 3. This provides for a stable gap between the flow diverter 1 and a fluid conduit or a bottom wall section of a storage element for storing fluid through which gap diverted fluid can exit the flow diverter 1.

The inlet section 11 of the flow diverter 1 can be seen in more detail in the depicted detail of the right-hand side insert 3. In the following the right-hand side insert 3 will be described, however, these explanations can respectively be applied to the other (left-hand side) insert 3 of the flow diverter 1.

The insert 3 comprises a fastening section 7, wherein the fastening section 7, in particular the outer surface 28 of the fastening section 7, widens towards the second end 6 of the insert 3 and is formed at least in sections conically which simplifies providing a form-fitting as well as force-fitting connection between the flow diverter 1 and a conduit into which the insert 3 is intended to be inserted.

In this view from below the inlet 12 as well as the hollow section 8 of the insert 3 can also be seen in more detail. The inlet 12 of the inlet section 11 is formed into the sidewall 15 of the insert 3 and comprises a lower, in particular circular, section and an upper, in particular V-shaped, section in the shown embodiment. However, the inlet 12 can also have other shapes. In the shown embodiment the V-shaped section supports providing the connection between the flow diverter 1 and a fluid conduit, as via the V-shaped section a circumferential compression of the insert 3 can be achieved easily when the insert 3 is inserted into a fluid conduit.

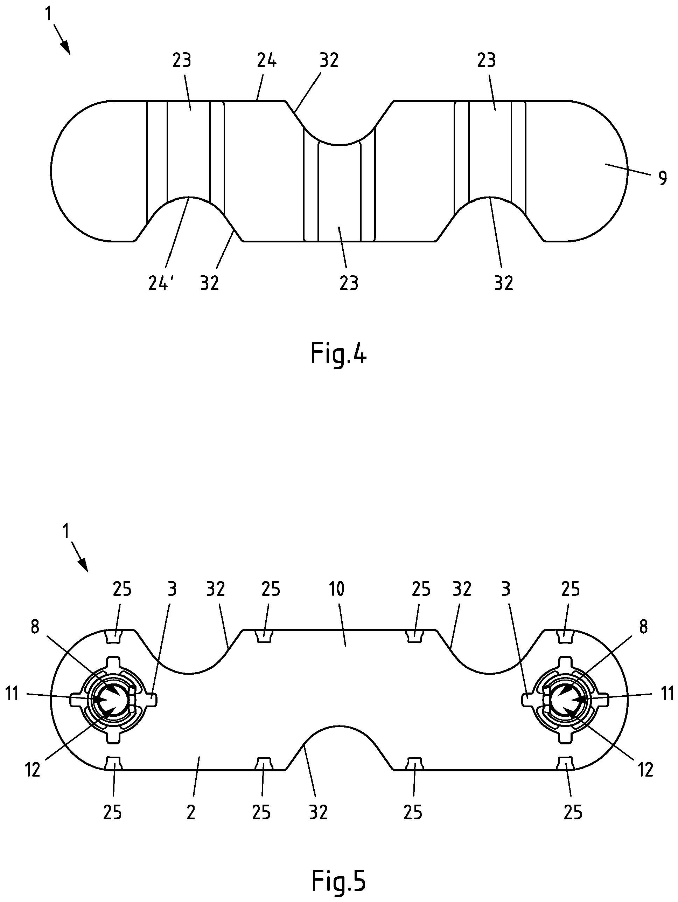

Fig. 4 shows a top view of the flow diverter 1 of Fig. 1. The already described plurality of projections 23 and plurality of recesses 32 provided at the diverter element 2 can be seen here. The plurality of recesses 32 are arranged at the circumference of the diverter element 2 and in an alternating pattern on opposite sides of the diverter element 2, wherein each recess 32 is arranged adjacent to one of the projections 23 and adjacent to the edges 24, 24' on opposing sides of the diverter element 2. The recesses are formed circular and designed as through holes, thus extend from the first side 9 to the second side 10 of the diverter element 2. This design allows for an easy handling of the flow diverter 1.

Fig. 5 shows a bottom view of the flow diverter 1 of Fig. 1. Here in particular the arrangement of the spacers 25 on the second side 10 of the diverter element spaced from the inserts 3 as well as spaced from the recesses 32 can be clearly seen. The spacers 25 are distanced from each other as well as the inserts 3 thus simplifying it to provide a stable gap through which fluid can exit the flow diverter 1.

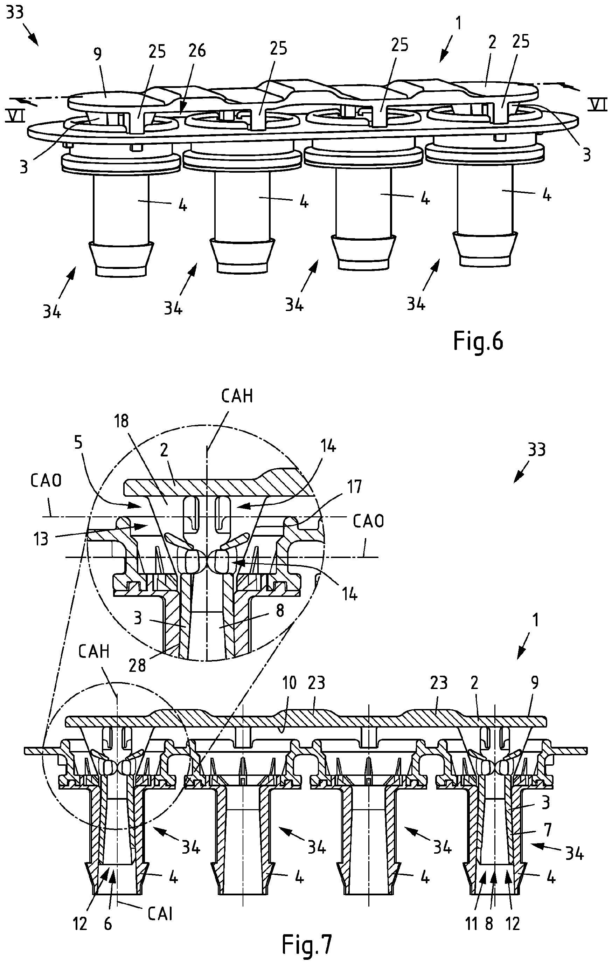

Fig. 6 shows a first embodiment of a fluid port system 33 comprising the flow diverter 1 of Fig. 1 in a perspective view.

The flow diverter 1 is inserted in sections into the fluid ports 34 with the inserts 3. At the same time the diverter element 2 of the flow diverter 1 is spaced apart from the fluid ports 34, in particular from the conduits 4 of the fluid ports 34, by means of the spacers 25 which provide a gap 26 between the diverter element 2 and the upper side of the fluid ports 34. Via this gap 26 fluid conveyed through the conduit 4 and the inserts 3, in particular the hollow sections 8 of the respective inserts 3, can be conveyed away from the flow diverter 1 in a diverted direction, thus preventing the formation of an upward jet and in turn reducing foaming.

In the shown embodiment of the fluid port system 33 the fluid ports 34 and the respective conduits 4 of the fluid ports 34 are arranged in a row. One of the inserts 3 of the flow diverter 1 is inserted into the fluid conduit at a first end, in Fig. 6 the left-hand end, of the row of fluid conduits 4 and the other insert 3 is inserted into the fluid conduit at a second end, in Fig. 6 the right-hand end, of the row of fluid conduits 4. This provides a stable connection between the fluid ports 34 and the flow diverter 1, in particular an unwanted rotation of the flow diverter 1 can be avoided. The fluid conduits 4 between the first end and the second end of the row of fluid conduits 4 is free from inserts 3, thus the inserts 3 are spaced apart from each other by two fluid conduits 4. However, it is also possible to mount the flow diverter 1 with more or less inserts 3 inserted into the fluid ports 34.

Fig. 7 shows the fluid port system 33 of Fig. 6 in a sectional front view together with a detail of this view. Here it can be seen that due to the widening of the outer surface 28 fastening section 7 the inserts 3 are connected in a force-fitting and form-fitting manner in the respective fluid conduits 4.

Moreover, the design of the outlet section 13 can be seen in more detail in the depicted detail of the left-hand insert 3 and fluid port 34. In the shown embodiment of the flow diverter 1 the center axes CAO of the outlets 14 of the insert 3 are arranged obliquely with respect to the center axis CAI of the inlet 12 and the center axis CAH of the hollow section 8. In addition, the center axis CAI of the inlet 12 runs parallel with respect to the center axis CAH of the hollow section 8. As a result, the fluid conveyed through the inlet 12 and the hollow section 8 is diverted in the area of the outlet section 13 thus preventing an upward jet and in turn leading to a reduction of foaming.

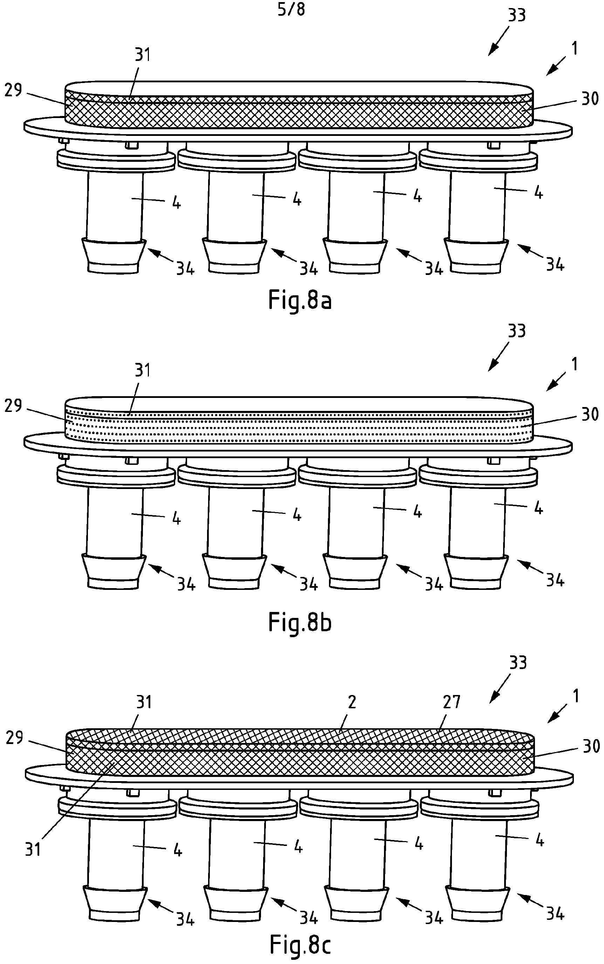

Fig. 8a shows a second embodiment of a fluid port system 33 in a perspective view. The fluid port system 33 of Fig. 8a corresponds substantially to the fluid port system of Fig. 6, therefore reference is made in particular to the differences with regard to the fluid port system of Fig. 6.

In the shown second embodiment of a fluid port system 33 the flow diverter 1 comprises additionally a skirt element 29 arranged adjacent to the diverter element 2, in particular arranged along the circumference of the diverter element 2 and extending from the diverter element 2 towards the second end 6 of the inserts 3 and thus also towards the fluid ports 34.

The skirt element 29 is formed by a skirt grid structure 30, wherein in the shown embodiment the skirt grid structure 30 has a plurality of openings 31 with a rectangular cross section. However, other cross sections are also possible. The average diameter of the openings 31 of the grid structure 30 shown is preferably between 0.5 mm and 1 mm.

Furthermore, the skirt element 29 is designed in such a way that the skirt element 29 takes up the entire area between the diverter element 2 and the upper side of the fluid ports 34. Thus, any fluid conveyed through the conduits 4 of the fluid ports 34 is filtered when exiting the flow diverter 1.

Moreover, in the shown embodiment the flow diverter 2 does not comprise projections 23 or recesses 32, however, these could also be provided on this embodiment.

Fig. 8b shows a third embodiment of a fluid port system 33 in a perspective view. The fluid port system 33 of Fig. 8b corresponds substantially to the fluid port system of Fig. 8a, therefore reference is made in particular to the differences with regard to the fluid port system of Fig. 8a.

In the shown third embodiment of a fluid port system 33 the openings 31 of the skirt grid structure 30 have a circular cross section. The shape of the openings 31 of the skirt grid structure 30 can be chosen based on the intended use-case.

Fig. 8c shows a fourth embodiment of a fluid port system 33 in a perspective view. The fluid port system 33 of Fig. 8c corresponds substantially to the fluid port system of Fig. 8a, therefore reference is made in particular to the differences with regard to the fluid port system of Fig. 8a.

In the shown third embodiment of a fluid port system 33 the diverter element 2 is formed by a diverter grid structure 27 for filtering a fluid. In this way the area available for filtering the fluid is further increased. In addition, the diverter grid structure 27 also diverts the flow direction of fluid conveyed through the fluid conduits 4 and the inserts 3 thus also reducing foaming. In the shown embodiment the diverter grid structure 27 has a plurality of openings 31 with a rectangular cross section. However, other cross sections are also possible.

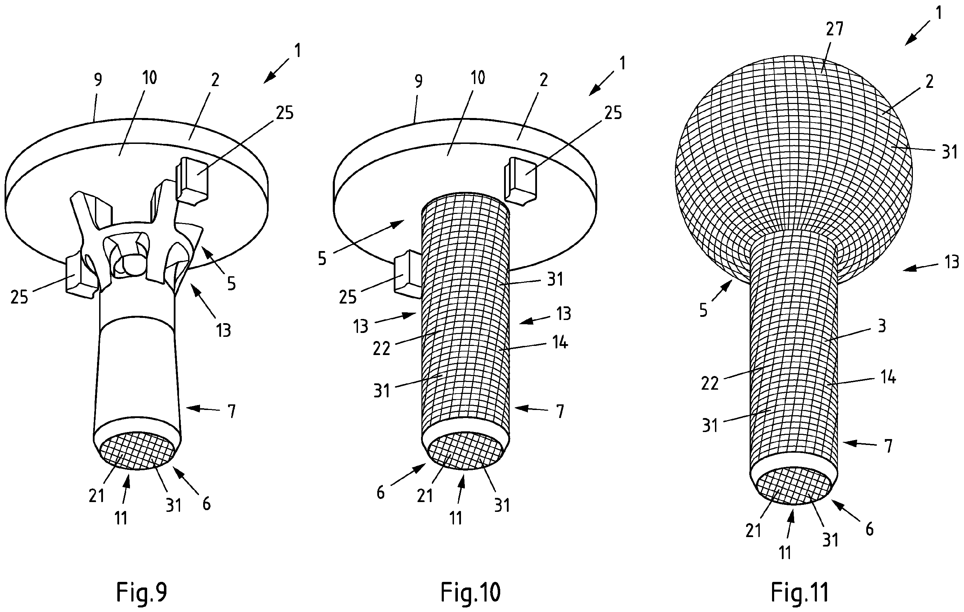

Fig. 9 shows a second embodiment of a flow diverter 1 in a perspective view from below.

The second embodiment of the flow diverter 1 also comprises a diverter element 2, an insert 3, an inlet section 11 and an outlet section 13. However, the flow diverter 1 comprises only one insert 3 and thus can be in particular used for fluid port systems 33 comprising only one fluid conduit 4. Alternatively multiple of these flow diverters 1 can be used for a fluid port system 33 comprising a plurality of fluid conduits 4 and/or fluid ports 34, wherein a respective flow diverter 1 is inserted into one fluid conduit 4 each, allowing for an individual placement of the flow diverters 1 depending on the respective use case.

The flow diverter 1 additionally comprises several spacers 25 provided at the second side 10 of the diverter element 2 to provide a sufficiently large gap between the diverter element 2 and a conduit 4 of a fluid port 34 to allow fluid to exit the flow diverter 1 when the flow diverter 1 is inserted into a conduit 4 of a fluid port 34.

The outlet section 13 of the flow diverter 1 shown in Fig. 9 and arranged at the first end 5 of the insert 3 is formed identical to the outlet sections 13 of the flow diverter 1 of Fig. 1, thus reference is made to the respective description.

In comparison to the flow diverter 1 of Fig. 1, the flow diverter of Fig. 9 comprises an inlet section 11 at the second end of the insert 3 which comprises an inlet grid structure 21. The inlet grid structure 21 has a plurality of openings 31 with a rectangular cross section. However, other cross sections are also possible. Providing an inlet grid structure 21 allows for the filtering of fluid conveyed through the insert 3. At the same time this configuration simplifies the manufacturing of the flow diverter 1 compared to a flow diverter 1 comprising a skirt grid structure, which skirt grid structure usually needs to span over a larger area to filter all the fluid conveyed through the insert 3 and thus needs more material during manufacturing.

Fig. 10 shows a third embodiment of a flow diverter 1 in a perspective view from below. The flow diverter 1 of Fig. 10 corresponds to a certain extend to the flow diverter 1 of Fig. 9, therefore reference is made in particular to the differences with regard to the flow diverter 1 of Fig. 9.

The outlet section 13, in particular the outlet 14, of the flow diverter 1 of Fig. 10 comprises, in particular is formed in sections of, an outlet grid structure 22. This enlarges the area through which the fluid can exit the insert 3 and provides additional area for filtering the fluid conveyed through the insert 3. The outlet grid structure 22 has a plurality of openings 31 with a rectangular cross section. However, other cross sections are also possible.

In the embodiment of Fig. 10 the fastening section 7 does not widen, however, a widening and/or cylindrical shape of the fastening section 7 are also possible.

Fig. 11 shows a fourth embodiment of a flow diverter 1 in a perspective view from below. The flow diverter 1 of Fig. 11 corresponds to a certain extend to the flow diverter 1 of Fig. 10, therefore reference is made in particular to the differences with regard to the flow diverter 1 of Fig. 10.

Compared to the flow diverter 1 of Fig. 10, the flow diverter 1 of the fourth embodiment does not comprises a plate shaped diverter element 2 but a spherical diverter element 2 formed by a diverter grid structure 27. This further enlarges the area through which the fluid can exit the insert 3 and provides additional area for filtering the fluid conveyed through the insert 3. Moreover, producing the majority or even almost every part of the flow diverter 1 from a grid structure simplifies manufacturing as the same material can be used for a substantial part of the flow diverter 1. The diverter grid structure 27 has in the shown fourth embodiment a plurality of openings 31 with a rectangular cross section. However, other cross sections are also possible.

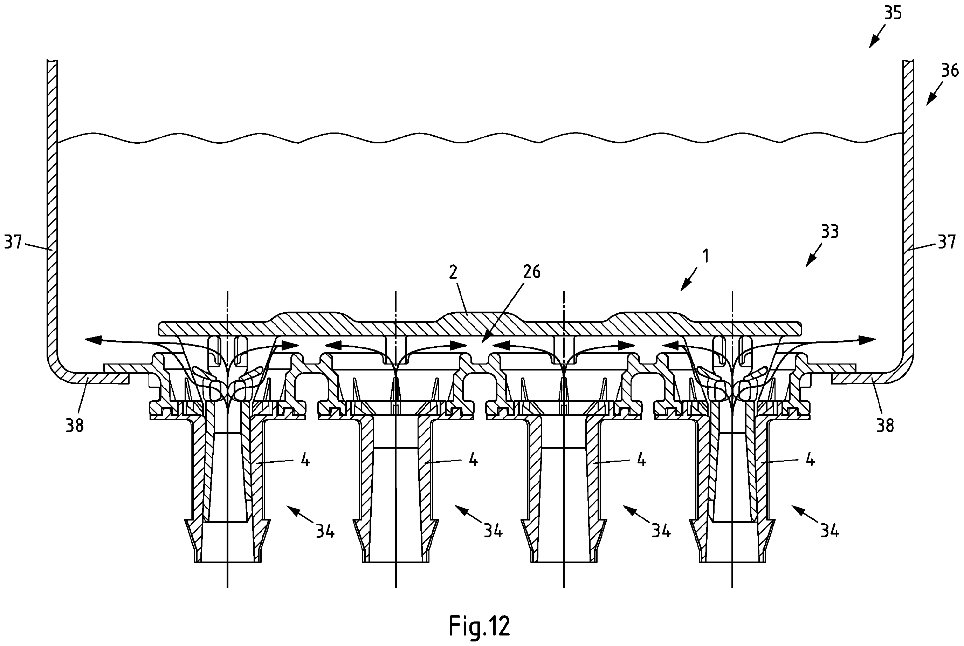

Fig. 12 shows an embodiment of fluid vessel 35 comprising the fluid port system 33 of Fig. 6 in a sectional view. Thus, the fluid port system 33 comprises the flow diverter 1 of Fig. 1.

The fluid vessel 35 also comprises a storage element 36. This storage element 36 could for example be a recirculation tank, preferably in a tangential flow filtration process. The storage element 36 comprises a bottom wall section 38 as well as several sidewall sections 37.

The fluid ports 34 of the fluid port system 33 are arranged at and preferably connected, in particular welded, to the bottom wall section 38 of the storage element 36 ensuring a fluid-tight connection between the fluid ports 34 and the storage element 36.

As indicated by the arrows, the fluid conveyed through the fluid ports 34 is diverted by the flow diverter 1, in particular the diverter element 2, such that the fluid cannot form an upward jet in the storage element 36. This reduces foaming of the fluid inside the storage element 36.

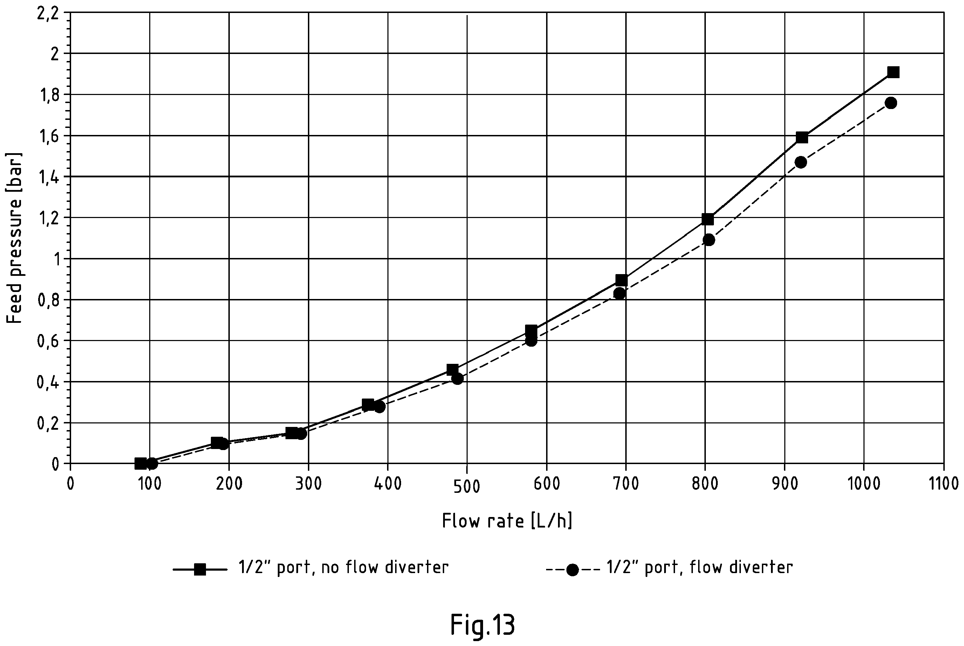

Fig. 13 shows a graph depicting the feed pressure in correlation to the flow rate for a fluid port 34 with and without a flow diverter 1 according to Fig. 1. The fluid port 34 (indicated as "port" in Fig. 13) is a fluid port as shown in Fig. 6.

The data for a fluid port 34 with a 0.5 inch diameter fluid conduit 4 without the use of a flow diverter 1 is indicated by square dots and a continues line. The data for the same fluid port 34 with a 0.5 inch diameter fluid conduit 4, however, with an inserted flow diverter 1 according to Fig. 1 is indicated by round dots and a dotted line. From the comparison of the data, it can be derived that the addition of the flow diverter 1 according to Fig. 1 barely reduces the feed pressure, wherein only minor differences occur at high flow rates. Thus, the addition of the flow diverter 1 only leads to a minor additional back pressure, however, with the additional benefit of reduced foaming.

### Reference signs

- 1: Flow diverter
- 2: Diverter element
- 3: Insert
- 4: Fluid conduit
- 5: First end of the insert
- 6: Second end of the insert
- 7: Fastening section
- 8: Hollow section
- 9: First side of the diverter element
- 10: Second side of the diverter element
- 11: Inlet section
- 12: Inlet
- 13: Outlet section
- 14: Outlet
- 15: Sidewall of the insert
- 16: Bar
- 17: Outer surface of the outlet section
- 18: Inner surface of the outlet section
- 19: Opening
- 20: Row
- 21: Inlet grid structure
- 22: Outlet grid structure
- 23: Projection
- 24: Edge
- 24': Edge
- 25: Spacer
- 26: Gap
- 27: Diverter grid structure
- 28: Outer surface of the fastening section
- 29: Skirt element
- 30: Skirt grid structure
- 31: Opening
- 32: Recess
- 33: Fluid port system
- 34: Fluid port
- 35: Fluid vessel
- 36: Storage element
- 37: Side wall section
- 38: Bottom wall section

- CAH: Center axis of the hollow section
- CAI: Center axis of the inlet
- CAO: Center axis of the outlet

## Claims

1. Flow diverter (1) for use in a pharmaceutical process comprising:
- a diverter element (2) for diverting at least in sections a flow direction of a fluid, and
- at least one insert (3), preferably at least two inserts (3), for inserting into at least one fluid conduit (4),
- wherein the at least one insert (3), preferably the at least two inserts (3), respectively comprises a first end (5) arranged adjacent to, preferably connected to, the diverter element (2) and a second end (6) distanced from the diverter element (2),
- wherein the at least one insert (3), preferably the at least two inserts (3), respectively comprises a fastening section (7) for fastening the flow diverter (1) to the at least one fluid conduit (4), and
- wherein the at least one insert (3), preferably the at least two inserts (3), respectively has on the inside a hollow section (8) for conveying a fluid.

2. Flow diverter (1) according to claim 1,
**characterized in that**
- the diverter element (2) comprises a first side (9) and/or a second side (10) arranged opposite to the first side (9) of the diverter element (2) and
- **in that** the at least one insert (3), preferably the at least two inserts (3), is arranged adjacent to, preferably connected to, the second side (10) of the diverter element (2) and/or the respective hollow section (8) faces, preferably at the first end (5) of the at least one insert (3), the second side (10) of the diverter element (2).

3. Flow diverter (1) according to claim 1 or claim 2,
**characterized in that**
- the at least one insert (3), preferably the at least two inserts (3), has respectively an inlet section (11) comprising at least one inlet (12), preferably a plurality of inlets (12), fluidly connected to the respective hollow section (8) and/or
- **in that** the at least one insert (3), preferably the at least two inserts (3), has respectively an outlet section (13) comprising at least one outlet (14), preferably a plurality of outlets (14), fluidly connected to the respective hollow section (8).

4. Flow diverter (1) according to claim 3,
**characterized in that**
- the inlet section (11), preferably the at least one inlet (12), in particular the plurality of inlets (12), is arranged at the second end (6) of the respective insert (3), in a sidewall (15) of the respective insert (3) and/or a at distance from the diverter element (3) and/or
- **in that** the outlet section (13), preferably the at least one outlet (14), in particular the plurality of outlets (14), is arranged at the first end (5) of the respective insert (3) adjacent to, preferably connected to, the diverter element (2) and/or in a sidewall (15) of the respective insert (3).

5. Flow diverter (1) according to claim 3 or claim 4,
**characterized in that**
the outlet section (13) comprises at least one bar (16), preferably a plurality of bars (16), and **in that**, preferably,
- the at least one bar (16), preferably the plurality of bars (16), at least in sections encompass, preferably at least in sections form, the at least one outlet (14), preferably the plurality of outlets (14),
- the at least one bar (16), preferably the plurality of bars (16), is arranged adjacent to, preferably connected to, the diverter element (2), preferably the second side (10) of the diverter element (2),
- the at least one bar (16), preferably the plurality of bars (16), extends away from the diverter element (2), preferably the second side (10) of the diverter element (2), and/or
- the plurality of bars (16) are arranged, preferably evenly distributed, around the circumference of the outlet section (13).

6. Flow diverter (1) according to any one of claims 3 to 5,
**characterized in that**
- the center axis (CAO) of the at least one outlet (14), preferably the plurality of outlets (14), is arranged at least in sections obliquely and/or parallel with respect to the center axis (CAI) of the at least one inlet (12), preferably the plurality of inlets (12), and/or the center axis (CAH) of the hollow section (8),
- **in that** the center axis (CAI) of the at least one inlet (12), preferably the plurality of inlets (12), is arranged at least in sections parallel and/or obliquely with respect the center axis (CAH) of the hollow section (8),
- **in that** the outer surface (17) and/or the inner surface (18) of the outlet section (13) tapers at least in sections, preferably from the first end (5) of the respective insert (3) and/or in the direction towards the second end (6) of the respective insert (3),
- **in that** the outer surface (17) and/or the inner surface (18) of the outlet section (13) is straight at least in sections, preferably from the first end (5) of the respective insert (3) and/or in the direction towards the second end (6) of the respective insert (3), and/or
- **in that** the at least one outlet (3), preferably the plurality of outlets (3), is formed at least in sections by a plurality of openings (19) arranged at least in sections around the circumference of the respective outlet section (13) and/or arranged in at least two rows (20), preferably extending away from the diverter element (2).

7. Flow diverter (1) according to any one of claims 3 to 6,
**characterized in that**
- the inlet section (11), preferably the at least one inlet (12), in particular the plurality of inlets (12), is formed at least in sections by an inlet grid structure (21) for filtering a fluid and/or the outlet section (13), preferably the at least one outlet (14), in particular the plurality of outlets (14), is formed at least in sections by an outlet grid structure (22) for filtering a fluid and
- **in that**, preferably, the outlet grid structure (22) is arranged at least in sections, preferably entirely, around the respective circumference of the at least one insert (3), preferably the at least two inserts (3), and/or the outlet grid structure (22) forms at least in sections, preferably predominantly, the at least one insert (3), preferably the at least two inserts (3).

8. Flow diverter (1) according to any one of claims 1 to 7,
**characterized in that**
- the diverter element (2), preferably the first side (9) and/or the second side (10) of the diverter element (2), is at least in sections, preferably adjacent to the at least one outlet, plate shaped,
- **in that** the diverter element (2), preferably the first side (9) and/or the second side (10) of the diverter element, is at least in sections, preferably adjacent to at least one outlet (14), flat and/or bent and/or
- **in that** at least one projection (23), preferably a plurality of projections (23), projects from the first side (9) of the diverter element (2) and/or extends from one edge (24) to an opposite edge (24') of the first side (9) of the diverter element (2).

9. Flow diverter (1) according to any one of claims 1 to 8,
**characterized in that**
the flow diverter (2) comprises at least one spacer (25) designed for distancing the diverter element (2) from the at least one fluid conduit (4) and/or for providing a gap (26) between the diverter element (2) and the at least one fluid conduit (4) and **in that**, preferably,
- the at least one spacer (25) is arranged adjacent to, preferably connected to, the diverter element (2), preferably the second side (10) of the diverter element (2),
- the at least one spacer (25) extends away from the diverter element (2), preferably the second side (10) of the diverter element (2), and/or
- the at least one spacer (25) is distanced from the at least one insert (3), preferably the at least two inserts (3).

10. Flow diverter (1) according to any one of claims 1 to 9,
**characterized in that**
- the at least two inserts (3) are spaced apart from each other, preferably along the diverter element (2),
- **in that** the at least two inserts (3) are provided for inserting into different fluid conduits (4),
- **in that** the diverter element (2) is at least in sections, preferably predominantly, in particular entirely, formed by a diverter grid structure (27) for filtering a fluid,
- **in that** the diverter element (2) is at least in sections curved, preferably spherical in shape,
- **in that** the fastening section (7) is designed for a form-fitting and/or force-fitting connection with the at least one fluid conduit (4),
- **in that** a cross section of the fastening section (7) has at least in sections a smaller diameter than a cross section of the outlet section and/or
- **in that** the outer surface (28) of the fastening section (7) widens at least in sections, preferably in the direction towards the second end (6), and/or the outer surface (28) of the fastening section (7) is at least in sections conically shaped.

11. Flow diverter (1) according to any one of claims 1 to 10,
**characterized in that**
the flow diverter (1) comprises a skirt element (29) arranged adjacent to, preferably connected to, the diverter element (2), and extending away from the diverter element (2), **in that** the skirt element (29) comprises at least in sections a skirt grid structure (30) for filtering a fluid and **in that**, preferably,
- the skirt element (29) is arranged at least in sections, preferably entirely, around the circumference of the diverter element (2) and/or the skirt element (29) is distanced from the at least one insert (3), preferably the at least two inserts (3), and/or
- the skirt grid structure (30) is provided at least in sections, preferably entirely, around the circumference of the skirt element (29) and/or the skirt grid structure (30) forms at least in section, preferably predominantly, the skirt element (29).

12. Flow diverter (1) according to any one of claims 7 to 11,
**characterized in that**
- the inlet grid structure (21), the outlet grid structure (22), the diverter grid structure (27) and/or the skirt grid structure (30) has at least in sections openings (31) with an average diameter of at least 0.25 mm, preferably at least 0.5 mm, in particular at least 0.75 mm, and/or at most 1.25 mm, preferably at most 1 mm, more preferably at most 0.75 mm, in particular at most 0.5 mm, and/or
- **in that** the inlet grid structure (21), the outlet grid structure (22), the diverter grid structure (27) and/or the skirt grid structure (30) has at least in sections openings (31) with a curved, preferably circular, and/or polygonal, preferably triangular, rectangular and/or hexagonal, cross section.

13. Flow diverter (1) according to any one of claims 1 to 12,
**characterized in that**
the diverter element (2) has at least one recess (32), preferably a plurality of recesses (32), and **in that**, preferably,
- the at least one recess (32), preferably the plurality of recesses (32), is arranged at least in sections at the circumference of the diverter element (2),
- the plurality of recesses (32) are arranged, preferably in an alternating pattern, on opposite sides of the diverter element (2),
- the at least one recess (32), preferably the plurality of recesses (32), is arranged, preferably in each case, adjacent to the least one projection (23), preferably the plurality of projections (23), and/or
- the at least one recess (32), preferably the plurality of recesses (32), extends from the first side (9) of the diverter element (2) to the second side (10) of the diverter element (2).

14. Fluid port system (33) for use in a pharmaceutical process comprising:
- at least one fluid port (34), and
- at least one flow diverter (2),
- wherein the at least one fluid port (34) comprises at least one fluid conduit (4), preferably a plurality of fluid conduits (4),
- wherein the at least one flow diverter (2) is inserted into the at least one fluid conduit (4) and, preferably, connected to the at least one fluid conduit (4) in a form-fitting and/or force-fitting manner,
**characterized in that**
the at least one flow diverter (2) is a flow diverter (2) according to any one of claims 1to 13.

15. Fluid port system (33) according to claim 14,
**characterized in that**
the plurality of fluid conduits (4) are arranged in a row and **in that**
- at least one insert (3) is arranged in a fluid conduit (4) at a first end of the row,
- at least one insert (3) is arranged in a fluid conduit (4) at a second end of the row,
- at least two inserts (3) are spaced apart by at least one fluid conduit (4), preferably at least two fluid conduits (4), of the row of fluid conduits (4), and/or
- at least one fluid conduit (4), preferably at least two fluid conduits (4), of the row of fluid conduits (4) is free from inserts.

16. Fluid vessel (35) for use in a pharmaceutical process comprising:
- a storage element (36) for storing a fluid, and
- at least one fluid port system (33),
- wherein the storage element (36) comprises a bottom wall section (38) and/or at least one sidewall section (37),
**characterized in that**
the at least one fluid port system (33) is a fluid port system (33) according to any one of claims 14 to 15.

17. Fluid vessel (35) according to claim 16,
**characterized in that**
- the at least one fluid port system (33) is arranged at the bottom wall section (38) of the storage element (36) and/or
- **in that** the at least one fluid conduit (4), preferably the plurality of fluid conduits (4), is fluidly connected with the storage element (36).
